Europäisches Patentamt

European Patent Office

Office européen des brevets

(19)

(11) Numéro de publication: **0 302 030**
**B1**

# FASCICULE DE BREVET EUROPEEN

(12)

(45) Date de publication du fascicule du brevet:
**28.11.90**

(21) Numéro de dépôt: 88830321.1

(22) Date de dépôt: **22.07.88**

(51) Int. Cl.⁵: **C02F 3/12,** C02F 3/30, C02F 1/50

(54) **Cuve d'épuration des eaux résiduaires et ménagères.**

(30) Priorité: 31.07.87 IT 944587
08.04.88 IT 1159688 U

(43) Date de publication de la demande:
**01.02.89 Bulletin 89/5**

(45) Mention de la délivrance du brevet:
**28.11.90 Bulletin 90/48**

(84) Etats contractants désignés:
**AT CH DE FR IT LI**

(56) Documents cités:
EP-A- 0 213 691
FR-A- 2 307 922
FR-A- 2 372 773
US-A- 3 666 106
US-A- 3 805 957
US-A- 4 664 795

(73) Titulaire: **OMNIA RESINA MAZZOTTI S.r.l., Via Molinello, 10 B, I-48010 Bagnara di Romagna (Ravenna)(IT)**

(72) Inventeur: **Mazzotti, Ferruccio, Via Garigliano, 13, I-48022 Lugo (Ravenna)(IT)**

(74) Mandataire: **Martini, Lazzaro, Ufficio Brevetti Ing. Lazzaro Martini Via dei Rustici 5, I-50122 Firenze(IT)**

ACTORUM AG

## Description

La présente invention concerne une cuve d'épuration des eaux usées résiduaires et ménagères, c'est à dire mixtes.

Il est connu que les eaux résiduaires et ménagères, c'est à dire composées des eaux noires et blanches, sont introduites souvant dans une unique cuve d'épuration biologique, par exemple du type Imhoff, mais les eaux provenant d'une telle cuve contiennent encore en suspension des matières polluantes non putrescibles, dérivant en grande partie des eaux blanches qui n'ont pas participé à la fermentation anaérobie, et également de la matière polluante putrescible, dérivant en grande partie des eaux noires, qui n'ont pas subit une fermentation aérobie.

La présente invention a pour but principal de réaliser une cuve dans laquelle il est possible d'obtenir, par circulation naturelle, l'épuration complète des eaux noires, la clarification des eaux blanches et la désinfection des eaux clarifiées.

Ce résultat a été atteint en conformité avec l'invention, en adoptant l'idée d'utiliser un conteneur cylindrique en résine de verre, subdivisé en plusieurs compartiments, en particulier cinq, parmi lesquels les deux premiers communiquent entre eux par l'intermédiaire d'une ouverture prévue dans la partie la plus basse de la cloison qui divise lesdits compartiments, de manière à réaliser respectivement, la sédimentation et la digestion des boues de matière putrescible par fermentation anaérobique, et les compartiments qui suivent le premier sont communicants entre eux deux à deux, en cascade, de manière à réaliser, dans les deux compartiments qui précèdent le dernier, la sédimentation de la matière non putrescible en suspension, et dans le dernier compartiment, l'oxydation forcée de la matière putrescible encore en suspension, suivie d'une désinfection efficace des eaux clarifiées; la voie d'entrée des eaux dans le premier compartiment de la cuve et la voie de sortie du dernier compartiment étant prévues le long d'une même direction diamétrale de la cuve.

Suivant une caractéristique de l'invention, chacun des compartiments de la cuve, du deuxième au quatrième, communique en cascade avec celui qui suit, par l'intermédiaire d'un tube plongeant dont l'entrée est abbaissée par rapport au niveau du liquide et dont la sortie est réhaussée par rapport au fond de la cuve; chacun desdits tubes plongeants comprend en outre un tronçon vertical développé au-dessus du niveau du liquide et ouvert au sommet.

Suivant une autre caractéristique de l'invention, le dernier compartiment comprend un secteur pour la désinfection des eaux clarifiées, au moyen de pastilles de chlore sec, introduites dans une cuvette ayant son fond au-dessous du niveau du liquide et à proximité de la sortie des eaux de la cuve, ou sinon introduites dans un conteneur percé, appliqué suspendu au couvercle de la cuve.

Suivant une autre caractéristique encore de l'invention, les cloisons verticales qui délimitent les différents compartiments sont de hauteur inférieure à celle du conteneur pour permettre le passage dans le premier compartiment des bio-gaz qui se forment dans les autre compartiments et de là leur sortie de la cuve à travers une voie unique.

Les avantages obtenus grâce à la présente invention, consiste en ce qu' une telle cuve est septique, de compacité et de résistance aux agents chimiques, biologiques et naturels élevées, ne forme pas d'écailles, ne génère pas de purin, présente un poids réduit, qui rend facile son transport et pratique sa mise en oeuvre dans et hors de la terre, elle présente un fonctionnement simple et économique, avec un écoulement naturel des eaux, de grande fiabilité même après une longue période de fonctionnement, permettant d'évacuer des eaux claires et purifiées en éliminant toute cause de pollution du terrain dans lequel elles peuvent être évacuées directement.

Ces avantages et caractéristiques ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif; dessins sur lesquels :

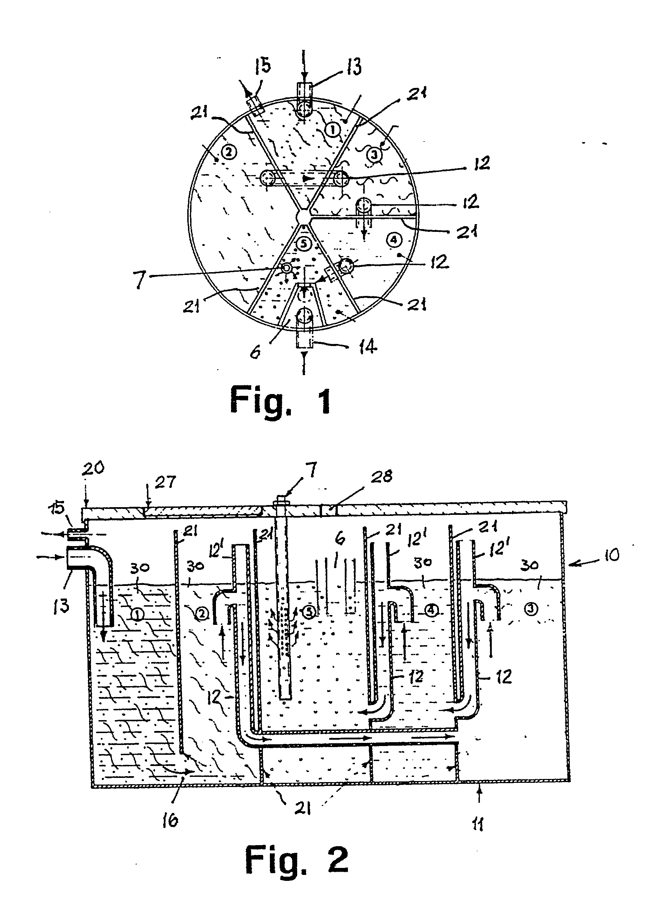

- la FIG. 1 représente la vue en plan et sans couvercle, d'une cuve d'épuration des eaux résiduaires et ménagères, en conformité avec l'invention; la FIG. 2 représente le développement sur un plan vertical de la cuve de la Fig. 1 suivant le parcours du liquide.

Réduite à sa structure essentielle et en référence aux dessins annexés, une cuve pour l'épuration des eaux résiduaires et ménagères selon l'invention est constituée d'un conteneur cylindrique 10, à fond plat 11 et avec couvercle 20 amovible, lequel délimite, en coopération avec cinq cloisons verticales, radiales 21, cinq compartiments 1-5. Le premier compartiment 1, dans lequel les eaux à épurer sont introduites à travers un tube d'entrée 13 passant à travers la paroi du conteneur à proximité de son sommet et plongeant dans le purin, est destiné à la sédimentation des boues. Une ouverture 16 prévue dans la partie inférieure de la cloison 21 qui divise ledit premier compartiment 1 du deuxième compartiment 2, permet aux boues, entraînées par le mouvement lent du liquide, de passer dans ledit deuxième compartiment 2, lequel est destiné à la fermentation anaérobie ou digestion des boues.

Ledit deuxième compartiment 2 est en outre en communication avec le troisième compartiment 3 et de la même manière le troisième avec le quatrième compartiment 4 et le quatrième avec le cinquième compartiment 5, par l'intermédiaire d'un tube plongeant 12 correspondant dont l'entrée est placée au-dessous du niveau du liquide 30 et dont l'entrée est placée soulevée du fond 11 du conteneur 1.

Chacun des tubes plongeants 12 comprend un tronçon vertical 12' émergeant du liquide 30 et ouvert à son sommet.

Lesdites cloisons 21 de séparation des différents compartiments sont de hauteur inférieure à celle du conteneur 10 pour permettre aux bio-gaz présents dans tous les compartiments, de se rassembler au sommet du premier compartiment 1 et de là d'être évacués dans l'air ambiant extérieur à travers un tube de sortie 15.

Le dernier compartiment 5 est pourvu d'un diffuseur 5 d'air en bulles, en immersion, alimenté par des moyens connus, pour permettre la fermentation aérobie, par oxydation forcée, des substances putrescibles encore en suspension dans le liquide et d'un compartiment 6 sous forme d'une cuvette pour permettre, avant leur évacuation, la désinfection des eaux désormais clarifiées, au moyen de chlore sec ou de produits similaires.

En variante, ledit compartiment 6 présente la forme d'un conteneur percé, appliqué suspendu au couvercle 20 du conteneur 10 à travers un trou traversant ce couvercle ou la paroi latérale du conteneur 10 (non représenté par souci de simplification).

Ledit conteneur 10 est avantageusement réalisé en résine polyester renforcée avec des fibres de verre et avec les cloisons 21 en polyuréthanne expansé revêtu de résine et fibres de verre. Le couvercle 20, qui est du même matériau que le conteneur, est avantageusement pourvu d'une trappe amovible et de joints d'échantéité aux gaz.

## Revendications

1) Cuve d'épuration des eaux résiduaires et menagères comprenant un conteneur de forme cylindrique (10) avec couvercle amovible (20) et divisée en plusieurs compartiments, caractérisée en ce qu' elle est pourvue de cinq cloisons (21) verticales, radiales pour délimiter des compartiments correspondants (1-5) dont les deux premiers (1,2) sont en communication entre eux par une ouverture (16) prévue dans le bas de la cloison correspondante (21) afin de réaliser, respectivement, la sédimentation et la fermentation anaérobie des matières polluantes putrescibles, et ceux (2-5) qui suivent le premier (1) sont en communication entre eux, deux à deux, au moyen de tubes (12) correspondants plongeant dans le liquide pour réaliser une sédimentation de la matière polluante, putrescible et non, encore en suspension dans les deux compartiments (3,4) qui précèdent le dernier (5) et en ce que le dernier compartiment (5) comprend un distributeur d'air en bulles (7) immergé dans le liquide afin de réaliser l'oxydation de la matière putrescible restante et un secteur (6) pour réaliser la désinfection des eaux clarifiées au moyen de pastilles de chlore sec.

2) Cuve d'épuration suivant la revendication 1, caracterisée en ce que lesdites cloisons (21) ont une hauteur inférieure à celle du conteneur (10) afin de permettre le passage dans le premier compartiment (1) des bio-gaz provenant des autres compartiments (2-5) et ensuite l'évacuation à l'exterieur par une voie de sortie (15).

3) Cuve d'épuration suivant la revendication 1, caractérisée en ce que lesdits tubes plongeants (12) comprennent une partie (12') qui dépasse du liquide (30) présent dans le compartiment correspondant et qui en haut est ouverte.

4) Cuve d'épuration suivant la revendication 1 caracterisée en ce que lesdits tubes plongeants (12) des différents compartiments ont l'embouchure, respectivement d'entrée et de sortie du liquide, à une distance correspondante égale du fond du conteneur (10).

5) Cuve d'épuration suivant la revendication 1 caracterisée en ce que lesdits tubes plongeants (12) des differents compartiments ont une ouverture, respectivement d'entrée et de sortie du liquide, à une distance différente correspondante du fond du conteneur (10).

6) Cuve d'épuration suivant la revendication 1, caracterisée en ce que le secteur (6) de désinfection des eaux clarifiées est une cuvette ayant l'entrée et la sortie placées à la même distance ou non du fond du conteneur (10).

7) Cuve d'épuration caracterisée en ce que ledit secteur (6) est un conteneur percé installé suspendu en correspondance d'un trou traversant le convercle (20) et fermé au moyen d'un bouchon (28) amovible ou différemment fixé à la paroi latérale du conteneur (10).

8) Cuve d'épuration selon la revendication 1, caracterisée en ce que l'entrée (13) des eaux à épurer dans le premier compartiment (1) du conteneur (10) et la sortie (14) des eaux épurées du dernier compartiment (5) du conteneur (10) sont placées dans la même direction diamétrale du conteneur (10).

9) Cuve d'épuration suivant la revendication 1, caracterisée en ce que le conteneur (10) est réalisé en une seule pièce en résine polyester renforcée avec des fibres de verre.

10) Cuve d'épuration suivant la revendication 1, caracterisée en ce que lesdites cloisons verticales (21) sont realisées en polyuréthanne revêtu de résine et fibres de verre.

11) Cuve d'épuration suivant la revendication 1, caracterisée en ce que ledit secteur (6) du dernier compartiment (5) est à proximité de la sortie (14) des eaux épurées.

12) Cuve d'épuration suivant la revendication 1, caracterisée en ce que ledit couvercle (20) est pourvu d'une trappe (27) d'inspection.

13) Cuve d'épuration suivant la revendication 1, caracterisée en ce que le couvercle (20), la trappe (27) et le bouchon (28) sont pourvus d'un joint continu d'étanchéité aux gaz.

## Claims

1. Purification tank for waste water and domestic sewage consisting of a container in cylindrical form (10) with a removable lid (20) and diveded into several compartments characterized by the fact that it is provided with five vertical radial partition walls (21) to limit the corresponding compartments (1-5), where the first (1, 2) communicate with one another by an opening (16) provided at the bottom of the corresponding partition wall (21) in order to produce sedimentation and anaerobic fermentation of putrescible polluting material, and those partition walls (2-5) which follow the first (1) are in communication two by two by means of corresponding pipes (12) dropping down into the liquid to produce sedimentation of the polluting material, whether putrescible or not, which is in suspension in the two compartments (3, 4) which precede the last one (5), and where the last compartment (5) contains an air bubble distributor (7) immersed in the liquid in order to produce oxidation of the remaining putrecible material and a sector (6) to produce disinfection of the clarified water by means of dry chlorine tablets.

2. Purification tank according to claim 1, characterized by the fact that the said partition walls (21) are of a height less than that of the container (10) in order to permit the passage of biogas originating from the other compartments (2–5) into the first compartment (1) and thus evacuation to the outside by an outlet (15).

3. Purification tank according to claim 1, characterized by the fact that the said falling pipes (12) contain a part (12') which passes from the liquid (30) present in the corresponding compartment and which is open at the top.

4. Purification tank according to claim 1, characterized by the fact that the said falling pipes (12) of the different compartments have their inlet and outlet opening for liquid at an equal distance from the bottom of the container.

5. Purification tank according to claim 1, characterized by the fact that the said falling pipes (12) from the different compartments have an inlet and outlet opening at different distances from the bottom of container (10).

6. Purification tank according to claim 1, characterized by the fact that sector (6) for disinfection of the clarified water is a tank having its inlet and outlet situated at the same distance or a different distance from the bottom of the container (10).

7. Purification tank characterized by the fact that the said sector (6) is a perforated container installed suspended aligned with a hole through the lid (20) and closed by means of a removable stopper (28), or differently fixed to the side wall of container (10).

8. Purification tank according to claim 1, characterized by the fact that the inlet (13) of the water to be purified into the first compartment (1) of the container (10) and the outlet (14) of the purified water from the last compartment (5) of the container (10) are placed in the same diametral direction of container (10).

9. Purification tank according to claim 1, characterized by the fact that the container is made in one piece from polyester resin reinforced with glass fibres.

10. Purification tank according to claim 1, characterized by the fact that the said vertical partition walls (21) are made of polyurethane strengthened with resin and glass fibres.

11. Purification tank according to claim 1, characterized by the fact that the said sector (6) of the last compartment (5) is close to the outlet (14) of the purified water.

12. Purification tank according to claim 1, characterized by the fact that the said lid (20) is provided with an inspection trapdoor (27).

13. Purification tank according to claim 1, characterized by the fact that the lid (20), the trapdoor (27) and the stopper (28) are provided with continuous sealing against gas.

**Patentansprüche**

1. Reinigungsbehälter für Ab- und Haushaltswässer mit einem zylindrischen Gefäß (10) mit abnehmbarem Deckel (20) und unterteilt in mehrere Abteile, dadurch gekennzeichnet, daß er mit fünf vertikalen und radialen Zwischenwänden (21) zum Begrenzen der entsprechenden Abteile (1-5) versehen ist, von denen die ersten beiden (1, 2) miteinander über eine Öffnung (16) am unteren Ende der entsprechenden Zwischenwand (21) verbunden sind, um die Sedimentation bzw. anaerobe Fermentation der faulbaren, verunreinigenden Materialien durchzuführen, und jene (2-5), die auf das erste (1) folgen, paarweise miteinander über entsprechende Rohre (12) in Verbindung sind, die in die Flüssigkeit eintauchen, um eine Sedimentation des verunreinigenden, faulbar oder nicht, Materials, das noch in den beiden Abteilen (3, 4) in Suspension ist, die vor den letzten (5) liegen, durchzuführen, und daß das letzte Abteil (5) einen Luftbläschenverteiler (7) besitzt, der in die Flüssigkeit eintaucht, um die Oxydation des verbleibenden, faulbaren Materials durchzuführen, und einen Abschnitt (6), um die Desinfektion der geklärten Wässer mittels Tabletten aus trockenem Chlor durchzuführen.

2. Reinigungsbehälter nach Anspruch 1, dadurch gekennzeichnet, daß die Zwischenwände (21) eine Höhe haben, die geringer ist als jene des Gefäßes (10), um den Durchtritt von Biogas, das von den anderen Abteilen (2-5) herrührt, in das erste Abteil (1) und schließlich die Entfernung nach außen über einen Austritt (15) zu gestatten.

3. Reinigungsbehälter nach Anspruch 1, dadurch gekennzeichnet, daß die eintauchenden Rohre (12) einen Abschnitt (12') besitzen, der aus der, in dem entsprechenden Abteil vorhandenen Flüssigkeit (30) heraustritt und oben offen ist.

4. Reinigungsbehälter nach Anspruch 1, dadurch gekennzeichnet, daß die eintauchenden Rohre (12) verschiedener Abteile die Öffnung des Eintrittes bzw. des Austrittes der Flüssigkeit in einem Abstand haben, der vom Boden des Gefäßes (10) gleich ist.

5. Reinigungsbehälter nach Anspruch 1, dadurch gekennzeichnet, daß die eintauchenden Rohre (12) verschiedener Abteile eine Öffnung für den Eintritt bzw. Austritt der Flüssigkeit in einem Abstand haben, der vom Boden des Gefäßes (10) verschieden ist.

6. Reinigungsbehälter nach Anspruch 1, dadurch gekennzeichnet, daß der Desinfektionsabschnitt (6) für die geklärten Wässer eine Küvette ist, bei der der Eintritt und Austritt in gleichem Abstand oder auch nicht vom Boden des Gefäßes (10) angeordnet ist.

7. Reinigungsbehälter, dadurch gekennzeichnet, daß der Abschnitt (6) ein durchbrochenes Gefäß ist, das hängend, übereinstimmend mit einem, den Deckel (20) durchsetzenden Loch, angeordnet ist und mittels eines entfernbaren Stopfens (28) verschlossen ist, oder auf andere Weise an der Seitenwand des Gefäßes (10) befestigt ist.

8. Reinigungsbehälter nach Anspruch 1, dadurch gekennzeichnet, daß der Eintritt (13) der zu reinigenden Wässer in das erste Abteil (1) des Gefäßes (10) und der Austritt (14) der gereinigten Wässer aus dem letzten Abteil (5) des Gefäßes (10) in derselben diametralen Richtung des Gefäßes (10) angeordnet sind.

9. Reinigungsbehälter nach Anspruch 1, dadurch gekennzeichnet, daß das Gefäß (10) einstückig aus mit Glasfasern verstärktem Polyesterharz hergestellt ist.

10. Reinigungsbehälter nach Anspruch 1, dadurch gekennzeichnet, daß die vertikalen Zwischenwände (21) aus mit Glasfaserharz beschichtetem Polyurethan hergestellt sind.

11. Reinigungsbehälter nach Anspruch 1, dadurch gekennzeichnet, daß der Abschnitt (6) des letzten Abteiles (5) in der Nähe des Austrittes (14) der gereinigten Wässer ist.

12. Reinigungsbehälter nach Anspruch 1, dadurch gekennzeichnet, daß der Deckel (20) mit einer Überprüfungsklappe (27) versehen ist.

13. Reinigungsbehälter nach Anspruch 1, dadurch gekennzeichnet, daß der Deckel (20), die Klappe (27) und der Stopfen (28) mit einer fortlaufenden, gasdichtenden Verbindung versehen sind.

Fig. 1

Fig. 2